# EUROPEAN PATENT APPLICATION

(11) **EP 0 641 799 A2**
(43) Date of publication of application: **08.03.1995**
(21) Application number: 94305562.4
(22) Date of filing: 27.07.1994
(51) Int. Cl.: C07F 7/08, C07F 7/21

(54) **Pristine alkylsiloxanes and method for their preparation**

(30) Priority: 02.08.1993 US 100814
(71) Applicant: DOW CORNING CORPORATION, Midland, Michigan 48686-0994 (US)
(72) Inventor: Legrow, Gary Edward, Midland, Michigan (US)
(74) Representative: Vandamme, Luc Johan Roger

(57) **Abstract**

This invention pertains to alkylsiloxanes that comprise greater than 99.9% alkylsiloxanes and contain less than 10 ppm -SiH, less than 10 ppm CH₂=CH- and less than 1 ppm platinum. The pristine alkylsiloxanes of our invention are produced by reacting an -SiH containing polysiloxane with an olefinic compound, under anhydrous conditions, in the presence of a supported platinum catalyst and oxygen.

## Description

This invention relates to pristine alkylsiloxanes that consist of less than 10 ppm -SiH and are further described as being greater than 99.9% alkylsiloxanes.

Methods for making alkylsiloxanes are well known in the art. U.S. Patent No. 3,440,263 to Brennan discloses a method for making modified silicone polymers wherein the olefinic compound is percolated over activated alumina and collected into an inert atmosphere prior to the reaction. Brennan further suggests the use of platinum catalyst that is deposited on an inert substance (heterogeneous catalyst). However, the method disclosed by Brennan does not produce pristine alkylsiloxanes. The resulting product is contaminated with residual -SiH and it is feasible for minute quantities of the platinum catalyst to solubilize into the reaction mixture.

However, these methods result in low quality or impure alkylsiloxanes that can result in a product which contains color and/or odor. The most common method for producing alkylsiloxanes is to react an olefinic compound (H₂C=CH-) with an -SiH containing polysiloxane using a platinum catalyst (hydrosilylation reaction). However, hydrosilylation reactions are known in the art as possessing several drawbacks. One drawback is the use of homogeneous catalysts, such as chloroplatinic acid, which cannot be removed following reaction completion. This causes impurities in the product and also provides the product with a yellow or colored hue. Even when heterogeneous catalysts, such as platinum supported on an inert substance, are used; the same color and contamination can result if there is moisture in the reactants. Such moisture will cause the platinum to solubilize in the product. Another drawback of the prior art methods is a large excess of the olefinic compound is required to drive the reaction to near completion. Even with the use of a large excess of the olefinic compound, there is a high concentration of unreacted -SiH in the product which is a problem. Further, the olefinic compound can isomerize thereby producing undesirable, internal olefins. The presence of internal olefins has several effects on the reaction and products. First, the internal olefins produce stronger complexes with the platinum thus retarding or inhibiting completion of the hydrosilylation reaction. Further, once these internal olefins are bound to any solubilized platinum that is present in the reaction system, it becomes nearly impossible to remove them. Finally, any unreacted olefin cannot be recycled due to the contamination with the internal olefins. Furthermore, the methods known in the art produce alkylsiloxanes that contain greater than 10 ppm of unreacted -SiH in the product.

An object of this invention is to provide pristine alkylsiloxanes which are greater than 99.9% alkylsiloxane and comprise less than 10 ppm -SiH, less than 10 ppm H₂C=CH- and less than 1 ppm platinum. A further object is to provide a method for the preparation of pristine alkylsiloxanes by hydrosilylation reactions, under anhydrous conditions, using a dry, heterogeneous catalyst and an oxygen containing environment.

Our invention provides alkylsiloxanes that comprise greater than 99.9% alkylsiloxanes and less than 10 ppm -SiH. The pristine alkylsiloxanes of this invention are produced by reacting an -SiH containing polysiloxane with an olefinic compound, under anhydrous conditions, in the presence of a supported platinum catalyst and oxygen.

The pristine alkylsiloxanes of the instant invention are characterized as being greater than 99.9% alkylsiloxanes and comprise less than 10 ppm -SiH, less than 10 ppm CH₂=CH- and less than 1 ppm platinum. These alkylsiloxanes are selected from polymers containing the structure 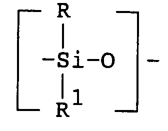
wherein R is selected from alkyl group having 1 to 3 carbon atoms and phenyl and R¹ is an alkyl group having at least 4 carbon atoms.

The pristine alkylsiloxanes may be linear or cyclic in structure. The pristine alkylsiloxanes may be alkylsiloxanes selected from 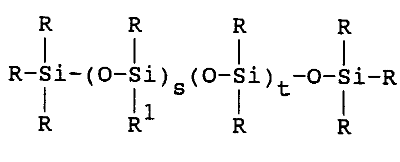 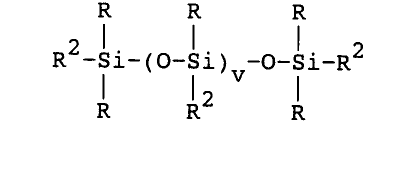 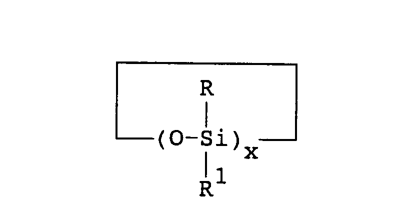 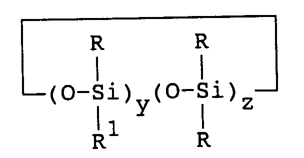
and mixtures thereof; where each R is independently selected from an alkyl group having 1 to 3 carbon atoms and phenyl; R¹ is an alkyl group having at least 4 carbon atoms; each R² is independently selected from R and R¹, with the proviso that at least one R² group is an R¹ group; s has a value of at least 1, t has a value of at least 1, v has a value of at least 1, x has a value of 3 to 8; y has a value of at least 1; and z has a value of at least 1 with the proviso that y+z has a value of 3 to 8.

In our alkylsiloxanes, each R is independently selected from the alkyl group having 1 to 3 carbon atoms and phenyl. R is exemplified by methyl, ethyl and phenyl. For the instant invention, it is preferred that at least 90% of the R groups are methyl.

R¹ is an alkyl group having at least 4 carbon atoms. R¹ is exemplified by hexyl, octyl, decyl, dodecyl, C₂₂-C₂₆ and C₃₀₊. In producing the pristine alkylsiloxanes of the instant invention, a mixture of olefinic compounds may also be used. Therefore, it is not necessary for each R¹ to be identical.

In the preceding formulae, s has a value of at least 1; t has a value of at least 1; v has a value of at least 1; x has a value of 3 to 8; y has a value of at least 1; and z has a value of at least 1, with the proviso that y+z has a value of 3 to 8. It is preferable that s has a value of 1 to 100; t has a value of 1 to 1,000; v has a value of 1 to 100; x has a value of 4 or 5 and that y+z has a value of 4 or 5.

The pristine alkylsiloxanes of the instant invention are characterized as being greater than 99.9% alkylsiloxanes and consisting of less than 10 ppm -SiH and CH₂=CH- and less than 1 ppm platinum. It is preferred that these pristine alkylsiloxanes be comprised of greater than 99.99% alkylsiloxane. It is also preferred that our pristine alkylsiloxanes contain less than 5 ppm -SiH and less than 5 ppm CH₂=CH-.

The pristine alkylsiloxanes of the instant invention are prepared by reacting siloxanes selected from siloxane polymers containing the structure 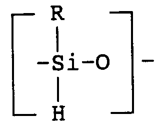
(herein referred to as -SiH containing siloxane polymers) wherein R is selected from alkyl group having 1 to 3 carbon atoms and phenyl.

The -SiH containing siloxane polymers useful in the instant invention may be linear or cyclic in structure. The -SiH containing siloxane polymers may be exemplified by -SiH containing siloxane polymers selected from 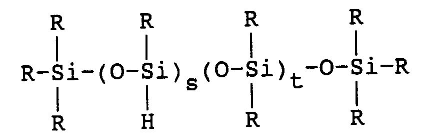 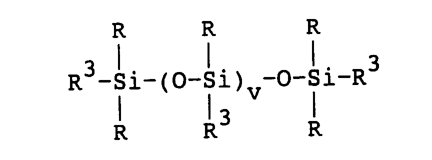 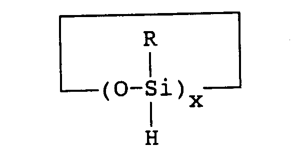 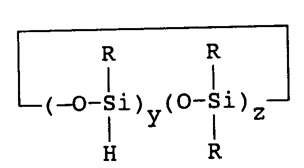
and mixtures thereof; where each R is independently selected from the alkyl group having 1 to 3 carbon atoms and phenyl; each R³ is independently selected from R and the hydrogen atom, with the proviso that at least one R³ group in each molecule is a hydrogen atom; s has a value of at least 1; t has a value of at least 1; v has a value of at least 1; x has a value of 3 to 8; y has a value of at least 1; and z has a value of at least 1 with the proviso that y+z has a value of 3 to 8.

In the -SiH containing siloxane polymers useful in the instant invention, each R is independently selected from alkyl group having 1 to 3 carbon atoms and phenyl. R may be further exemplified by methyl, ethyl and phenyl. It is preferred that at least 90% of the R groups are methyl.

The -SiH containing siloxane polymers are exemplified by dimethylmethylhydrogen siloxanes, trimethyl endblocked methylhydrogen siloxanes, methylphenylmethylhydrogen siloxanes, methylhydrogen endblocked dimethyl siloxanes, methylhydrogen cyclosiloxanes and dimethylmethylhydrogen cyclosiloxanes.

The olefinic compounds used in the instant invention are linear or branched alkylene compounds containing 4 or more carbon atoms. The olefinic compounds are 1-hexene, 1-heptene, 1-octene, 1-decene, 1-dodecene, n-octadecene, C₃₀₊ alpha olefin fraction and 4-methyl-1-pentene. These olefinic compounds may be a single olefinic compound or a mixture thereof.

The amount of olefinic compound to -SiH containing siloxane polymer is not specifically limited however, a small excess of the reactant, which is more easily removable from the alkylsiloxane by known distillation techniques, should be used. When using a C₄ to C₁₆ olefinic compound, it is preferable to use the olefinic compound in excess. In all instances, the present invention can be accomplished with 3 to 10 mole percent excess of the olefinic compound(s) or -SiH containing siloxane polymer(s). Any reactants which are used in excess should be removed from the alkylsiloxane after the completion of the reaction of our preparatory method.

If the olefinic compound and/or the -SiH containing siloxane polymer are not readily removed from the alkylsiloxane, it may become necessary to add another olefinic compound or -SiH containing siloxane polymer that is capable of being easily removed to facilitate the elimination of the original olefinic compound or -SiH containing siloxane polymer which was initially used in excess. It is preferable to initially use an excess of olefinic compound to react with the non-removable -SiH containing siloxane polymer and then add an excess of a removable -SiH containing siloxane polymer to react with the excess olefinic compound.

No special treatment of the -SiH containing siloxane polymer and olefinic compound is necessary in the instant invention. However, the -SiH containing siloxane polymer and the olefinic compound should be at least 95% pure, preferably at least 98% pure and more preferably at least 99% pure.

The reaction to produce the pristine alkylsiloxanes of the instant invention may be carried out at a temperature of 50°C. to 150°C. Preferably, it is conducted from 60°C. to 130°C. at atmospheric pressure. Typically, the reaction is carried out at the reflux temperature of the olefinic compound unless it is impracticable to carry out the reaction at that temperature. It is feasible to carry out the reaction at temperatures below 50°C. However, the reaction time to achieve less than 10 ppm of -SiH or CH₂=CH- will be excessive thereby making it impractical. It is also feasible to carry out the reaction at temperatures above 150°C. However, the resulting product may be discolored or tinted which is also undesired. Temperatures may be adjusted appropriately should the reaction be run at pressures above or below atmospheric conditions.

The catalyst used in the instant invention is a platinum metal that is supported on an inert surface such as carbon or alumina with the supported catalyst comprising 0.1% to 3.0% by weight of platinum. The catalyst is present in the reaction in amounts from 0.001 to 0.1 weight percent platinum based on the weight of the total reactants and preferably from 0.003 to 0.01 weight percent platinum based on the total weight of the reactants.

In addition to catalyst, the instant invention requires the presence of oxygen to facilitate the reaction between the olefinic compound and the -SiH containing siloxane polymer. The oxygen is added into the reaction mixture by bubbling it into either one of the reactants, by bubbling it into the reaction mixture or by providing the oxygen in the head space of the reaction vessel. Subsurface addition of oxygen into the reaction mixture on a continuous basis is most preferred since it allows for quicker equilibration of the solution concentration. Contacting the oxygen on the surface of the liquid, such as by blowing it into the vapor space of the reactor or by purging the reactor system with oxygen, will not be as efficient, but in some cases may be the safest manner of providing the needed oxygen.

The amount of oxygen added will be dependent on the operating conditions, the reactants and the amount of catalyst present. Insufficient oxygen will result in higher levels of -SiH while excessive oxygen will result in unwanted by-product formation. It is preferred to introduce the oxygen combined with an inert gas at an oxygen level of from 1 part per million to 90 weight percent, more preferably 1 to 5 weight percent. The inert gas which the oxygen may be combined with may be selected from any inert gas such as nitrogen, argon and others.

It is essential in the preparation of the pristine alkylsiloxanes of this invention that the reaction be run under anhydrous conditions. Although it typically is not necessary to treat the -SiH containing siloxane polymer or the olefinic compound, care should be taken to ensure that they do not contain water. Further, the -SiH containing siloxane polymer should be incapable of reacting to produce water under the hydrosilylation reaction conditions. For example, if the -SiH containing siloxane polymer was produced using a homogeneous catalyst and there is residual catalyst in the polymer, then it may react to produce water. One skilled in the art will be able to readily determine when the siloxane polymer is not suited for the method of this instant invention.

The catalyst should be free of essentially all water prior to introduction into the reaction system. The presence of moisture in the catalyst results in an impure alkylsiloxane. Drying of the catalyst can be done by any method known in the art. For example, the catalyst may be placed in an oven blanketed with an inert atmosphere at 150°C. for a period of 24 hours. Additionally, the oven may be under vacuum to further aid in the removal of water from the catalyst. One skilled in the art will be able to readily determine when the catalyst has been dried such that it is free of essentially all water. When the catalyst has not been sufficiently dried, the result is an alkylsiloxane that contains color and the olefinic compound undergoes isomerization.

The method to produce the pristine alkylsiloxanes may be run on a batch, semi-continuous or continuous manner. A batch reaction comprises a means wherein all the reactants are added at the beginning and the processing is carried out according to a predetermined course of reaction during which no reactant is fed into or removed from the reactor. Typically a batch reactor will be a tank with or without agitation means. A semi-continuous reactor comprises a means wherein some of the reactants are charged at the beginning and the remaining are fed continuously as the reaction progresses. The product may optionally be simultaneously withdrawn from the semi-continuous reactor. A continuous reactor comprises a means wherein the reactants are introduced and the product are withdrawn simultaneously. The continuous reactor may be a tank, tubular structure, a tower or some other like structure, the overall design not being essential.

The time for the reaction to go to completion will be dependent on the reactants, reaction temperature, catalyst concentration and oxygen concentration. One skilled in the art will be able to determine completion by simple analytical methods such as gas liquid chromatography or by infared spectrometry.

After the reaction has gone to completion, the excess reactant and the catalyst must be removed from the pristine alkylsiloxane. Removal of the excess reactant can be done by known distillation or stripping techniques. Such distillation techniques may be conducted at atmospheric pressure or under vacuum depending on the excess reactant to be removed. Removal of the catalyst can be done by methods known in the art with filtration being the preferred method. It is preferred to remove the catalyst prior to removal of the excess reactant.

### Analysis:

The -SiH Content (Examples 1-4): The -SiH content was determined by an infared spectroscopy procedure based on ASTM E-168. The absorbance of a specific band in an infrared spectrum was compared with the absorbance of the same band in a reference spectrum of known concentration.

The -SiH Content (Comparative Examples 1-3): The -SiH content was determined by reacting a sample of the alkylsiloxane product with a saturated solution of sodium butylate in a closed system. The hydrogen that was released was measured manometrically.

Olefin Content: The olefin content in the alkylsiloxanes was determined by iodine monochloride reaction. Iodine monochloride reacts by addition to vinyl or other unsaturated structure in organic materials. The reaction is quantitative. The excess reagent is determined by titration with sodium thiosulfate. The results are reported as parts per million (ppm) CH₂=CH-.

Platinum Content: The platinum content was determined by atomic absorption spectroscopy - ashing technique. In this method, organic matter is destroyed by acid digestion under oxidizing conditions to convert the metallic elements to the ionic state. SiO₂ is removed by treatment with HF. The water-soluble metallic elements are quantitatively determined over a range of parts per million to percent by atomic absorption spectroscopy. Sample solutions are aspirated through a flame and the absorbance determined. Standard curves are used to relate the absorbance to concentration.

Catalyst Treatment: In the Examples and Comparative Examples, the catalyst was dried by placing it in an oven at 150°C. for at least 24 hours prior to use.

### Example 1

To a suspension of 2 g of dry 0.5% Pt/C in 58 g (0.69 moles) of 1-hexene, heated to reflux in a 1% oxygen/99% nitrogen atmosphere, was added dropwise over a period of 1 hour, 142 g (0.64 mole) of 1,1,1,3,5,5,5-heptamethyltrisiloxane. After complete addition, the suspension was maintained at reflux for an additional 1 hour, cooled to room temperature and then filtered through a 10 micrometer cartridge filter to remove the Pt/C catalyst. The clear, colorless, liquid was then heated to 50°C. at 133.3 Pa (1 mm Hg) vacuum for 1 hour to remove the excess 1-hexene (4.2 g (0.05 mole) in theory).

The resulting product was a clear, colorless, odorless liquid of weight 195 g (99% yield) with a refractive index (RI) of 1.411 (20°C.) and density of 0.84 g/ml (20°C).

Analysis of the product for residual -SiH showed less than 1 ppm. Similar analysis for olefin content showed less than 2 ppm. No platinum was detected.

### Example 2

To a suspension of 2 g of dry 0.5% Pt/C in 89 g (0.53 moles) of 1-dodecene heated to 100°C. in a 1% oxygen/99% nitrogen atmosphere, was added dropwise over a period of 1 hour, 111 g (0.50 mole) of 1,1,1,3,5,5,5-heptamethyltrisiloxane. After complete addition, the suspension was maintained at 100°C. for an additional 1 hour, cooled to room temperature and then filtered through a 10 micrometer cartridge filter to remove the Pt/C catalyst. The clear, colorless liquid was then heated to 100°C. at 133.3 Pa (1 mm Hg) vacuum for 1 hour to remove the excess 1-dodecene (5.0 g (0.03 mole) in theory).

The resulting product was a clear, colorless, odorless liquid of weight 196 g (99% yield) with RI of 1.43 (20°C.) and density of 0.85 g/ml (20°C.).

Analysis of the product showed less than 1 ppm for residual -SiH, 5 ppm for olefin content and platinum was not detected.

### Example 3

To a suspension of 2 g of dry 0.5% Pt/C in 135 g (0.268 moles) of liquid C₃₀₊ alpha olefin fraction (Chevron Chemical Company) heated at 100°C. in a 1% oxygen/99% nitrogen atmosphere, was added dropwise over a period of 1 hour, 65 g (0.293 mole) of 1,1,1,3,5,5,5-heptamethyltrisiloxane. After complete addition, the suspension was maintained at reflux for an additional 1 hour. This suspension was then filtered hot through a 10 micrometer cartridge filter to remove the Pt/C catalyst. The clear liquid was then heated to 125°C. at 133.3 Pa (1 mm Hg) vacuum for 1 hour to remove the excess 1,1,1,3,5,5,5-heptamethyltrisiloxane (5.6 g (0.025 mole) in theory).

The resulting product was a white odorless wax of weight 193 g (98% yield) with density of 0.85 g/ml (20°C.) and softening point of 60°C.

Analysis of the product showed less than 5 ppm for residual -SiH and 10 ppm for olefin content and no platinum was detected.

### Example 4

To a suspension of 2 g of dry 0.5% Pt/C in 136 g (0.54 moles) of n-octadecene heated to 100°C in a 1% oxygen/99% nitrogen atmosphere, was added dropwise over a period of 1 hour, 64g (0.516 equiv.) of a linear trimethylsiloxy endblocked methylsiloxanedimethylsiloxane copolymer. After complete addition, the suspension was maintained at 100°C. for an additional 1 hour. To the suspension was added 11.1 g (0.05 mole) of 1,1,1,3,5,5,5-heptamethyltrisiloxane over a few minutes of time followed by heating at 100°C. for an additional hour. This suspension was filtered through a 10 micrometer cartridge filter to remove the Pt/C catalyst. The clear liquid was then heated to 125°C. at 133.3 Pa (1 mm Hg) vacuum for 1 hour to remove the excess 1,1,1,3,5,5,5-heptamethyltrisiloxane (5.8 g (0.026 mole) in theory).

The resulting product was a white odorless wax of weight 201 g (98% yield) with density of 0.85 g/ml (20°C) and a softening point of 32°C.

Analysis of the product showed less than 5 ppm for residual -SiH, 5 ppm olefin content and detection of no platinum.

### Comparative Example 1

This example was carried out according to the method described in U.S. Patent No. 3,440,263. The catalyst was dried according to our invention before use which is not disclosed in U.S. Patent No. 3,440,263.

Through a glass column, 20 mm in diameter and 230 mm in length - containing 170 mm of activated alumina, were passed 300 ml of 1-decene over 4 hours, under a nitrogen blanket at room temperature.

A mixture of 100 grams (0.716 mole) of the above treated 1-decene, 23.0 g (0.37 mole) of a siloxane comprised 80% methyl hydrogen cyclosiloxanes and 20% methyl hydrogen polysiloxanes and 1.23 g of dry 0.5% Pt/C were added to a three necked reaction flask, equipped with a thermometer, stirrer and condenser. The reaction mixture was heated to reflux conditions and held for 131 minutes at the end of that time the catalyst was filtered off. Prior to the removal of the excess 1-decene, the -SiH content was 13 ppm. This correlates to a theoretical -SiH in the stripped product of 21.3 ppm -SiH. Thus, the compositions produced by the method disclosed in U.S. Patent No. 3,440,263 are not pristine alkylsiloxanes, even when the olefin is purified and a large excess of the olefin is used.

### Comparative Example 2

This example was carried out according to the method described in U.S. Patent No. 3,440,263 using a dry catalyst, except the reaction mixture was blanketed under N₂ during the reaction.

A mixture of 64 grams (0.46 mole) of the 1-decene treated as in Comparative Example 1, 23.0 g (0.37 mole) of a siloxane comprised 80% methyl hydrogen cyclosiloxanes and 20% methyl hydrogen polysiloxanes and 0.87 g of dry 0.5% Pt/C were added to a three necked reaction flask, equipped with a thermometer, stirrer and condenser. The reaction mixture was heated to reflux conditions under a nitrogen blanket and held for 237 minutes. At the end of that time the catalyst was filtered off. Prior to the removal of the excess 1-decene the -SiH content was 42 ppm. This correlates to a theoretical -SiH in the stripped product of 48.7 ppm -SiH. Thus, in the absence of oxygen it is not possible to produce pristine alkylsiloxanes even when the catalyst has been dried, the olefin has been purified and a large excess of the olefin is used.

### Comparative Example 3

This example was carried out according to the method described in U.S. Patent No. 3,440,263 using a dry catalyst, except the reaction mixture was blanketed under O₂/N₂ during the reaction.

A mixture of 64 grams (0.46 mole) of the 1-decene treated as in Comparative Example 1, 23.0 g (0.37 mole) of a siloxane comprised 80% methyl hydrogen cyclosiloxanes and 20% methyl hydrogen polysiloxanes and 0.87 g of dry 0.5% Pt/C were added to a three necked reaction flask, equipped with a thermometer, stirrer and condenser. The reaction mixture was heated to reflux conditions (174°C.) under an oxygen/nitrogen blanket and held for 237 minutes. At the end of that time the catalyst was filtered off. Prior to the removal of the excess 1-decene the -SiH content was 4.3 ppm. This correlates to a theoretical -SiH in the stripped product of 5 ppm -SiH. Thus, the presence of oxygen can result in compositions which are pristine alkylsiloxanes only under the circumstances of the teaching of our invention.

### Comparative Example 4

This is an example of a synthesis of an alkylmethylsiloxane where the reagents were not adequately dried (therefor the reaction was not run under anhydrous conditions) and oxygen was not used a co-catalyst for the hydrosilylation.

To a suspension of 0.025 g of 5%Pt/C (31 ppm Pt) in 10.42 g (0.12 mole) of 97% pure hexene-1 at reflux temperature (58°C.) was added over a 20 minute period 29.68 g (0.096 eqiv. -SiH) of a trimehtylsiloxane-terminated linear methylsiloxanedimethylsiloxane copolymer. The temperature was then raised to 110°C. and held for 6 hours.

Analysis of the liquid product for residual -SiH showed 66 ppm. Analysis of the olefin (25 molar% excess in theory) in the product by gas chromatography and mass spectrometry showed the olefins present to be 20.9% hexene-1, 19.3% hexene-2 and 59.8% hexene-3.

The isomerization of the hexene-1 occurred in this reaction due to creation of moisture in the starting siloxane. Moisture was created because the starting siloxane was produced by a method using a homogeneous catalyst system. Even after the homogeneous catalyst is neutralized the siloxane still undergoes rearrangement upon heating thereby producing water as a by-product.

Addition of fresh Pt/C catalyst or fresh alpha-olefin will not allow completion of the hydrosilylation because of the presence of the internal olefins.

## Claims

**1.** A pristine alkylsiloxane selected from the group consisting of alkylsiloxanes having the formula 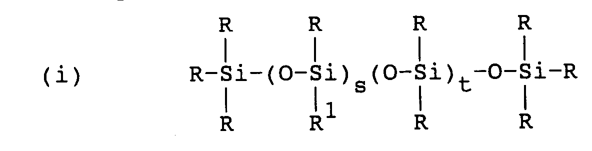 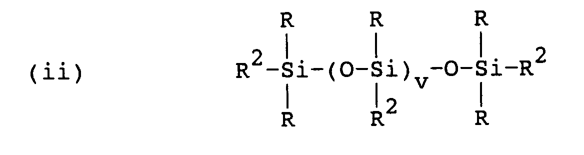 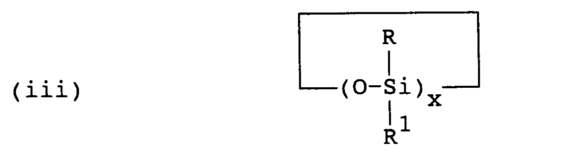 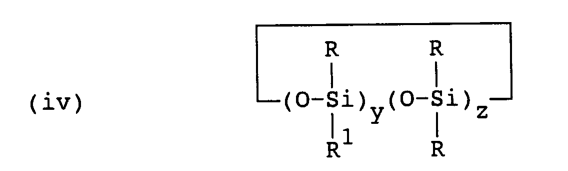 and (v) mixtures thereof;
where each R is independently selected from alkyl group having 1 to 3 carbon atoms and phenyl; R¹ is an alkyl group having at least 4 carbon atoms; each R² is independently selected from R and R¹, with the proviso that at least one R² group in each molecule is an R¹ group; s has a value of at least 1, t has a value of at least 1, v has a value of at least 1, x has a value of 3 to 8; y has a value of at least 1; and z has a value of at least 1, with the proviso that y+z has a value of 3 to 8;
wherein the pristine alkylsiloxane is greater than 99.9% alkylsiloxane and consists of less than 10 ppm -SiH, less than 10 ppm CH2=CH- and less than 1 ppm platinum.

**2.** A method for producing pristine alkylsiloxanes wherein the method comprises
(A) reacting, under anhydrous conditions,
(I) an -SiH containing siloxane polymer and
(II) an olefinic compound having at least 4 carbon atoms in the presence of
(III) a supported platinum catalyst and
(IV) oxygen,
for a period of time sufficient to produce greater than 99.9% pristine alkylsiloxane consisting of less than 10 ppm -SiH and less than 10 ppm CH=CH-, and
(B) recovering the pristine alkylsiloxane from (A).

**3.** A method as claimed in claim 2 wherein the -SiH containing siloxane polymer is selected from the group consisting of 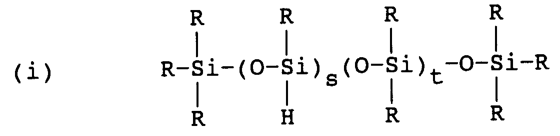 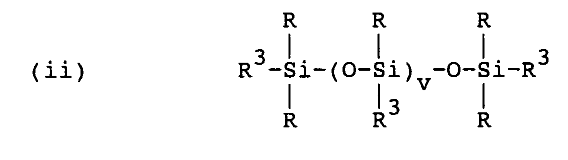 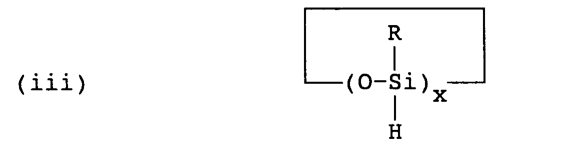 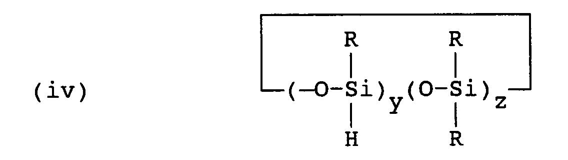 and (v) mixtures thereof;
where each R is independently selected from alkyl group having 1 to 3 carbon atoms and phenyl; each R³ is independently selected from R and the hydrogen atom, with the proviso that at least one R³ group in each molecule is a hydrogen atom; s has a value of at least 1, t has a value of at least 1, v has a value of at least 1, x has a value of 3 to 8; y has a value of at least 1; and z has a value of at least 1, with the proviso that y+z has a value of 3 to 8.

**3.** A method as claimed in claim 2 wherein the oxygen is combined with an inert gas.

**4.** A method as claimed in claim 3 wherein the oxygen is introduced subsurface into the reaction mixture.

**5.** A method as claimed in claim 3 wherein the reaction is run at a temperature of 50°C. to 150°C., at atmospheric pressure.

**6.** A method as claimed in claim 3 wherein there is a 3 to 10 mole percent excess of the olefinic compound.

**7.** A method as claimed in claim 3 wherein there is a 3 to 10 mole percent excess of the -SiH containing siloxane polymer.
